# EUROPEAN PATENT SPECIFICATION

(11) **EP 2 912 953 B1**
(45) Date of publication and mention of the grant of the patent: **05.12.2018**
(21) Application number: 13848220.3
(22) Date of filing: 21.10.2013
(51) Int. Cl.: A23L 7/113, A23L 7/109

(54) **MACARONI**
MAKKARONI
MACARONI

(30) Priority: 26.10.2012 JP 2012236549; 06.02.2013 WO PCT/JP2013/052731
(43) Date of publication of application: 02.09.2015
(73) Proprietor: Nisshin Foods Inc., Tokyo 101-8441 (JP)
(72) Inventor: KIMURA Ryusuke, Tokyo 103-8544 (JP); KAJIO Fusaki, Gunma 374-0052 (JP)
(74) Representative: Casalonga
(86) International application number: PCT/JP2013/078488
(87) International publication number: WO 2014/065244

(56) References cited:
- EP-A1- 0 557 139
- JP-A- H0 856 596
- JP-A- 2007 089 564
- JP-A- 2011 004 701
- JP-A- 2011 004 701
- US-A- 5 728 418
- US-A- 5 935 628
- US-B1- 7 032 541
- Laurel: "Stuffed portabella mushrooms with pantry red sauce and sun-shaped pasta - Home In Disarray", , 4 June 2010 (2010-06-04), XP055350798, Retrieved from the Internet: URL:http://www.homeindisarray.com/2010/06/ stuffed-portabella-mushrooms-with-pantry-r ed-sauce-and-sun-shaped-pasta.html [retrieved on 2017-03-01]
- DAWE P R: "PASTA SHAPE DESIGN", PASTA AND SEMOLINA TECHNOLOGY, XX, XX, 1 January 2001 (2001-01-01), pages 119-157, XP001184737,
- Anonymous: "Macaroni - Wikipedia", , 10 October 2012 (2012-10-10), XP055409675, Retrieved from the Internet: URL:https://en.wikipedia.org/w/index.php?t itle=Macaroni&oldid=516919853 [retrieved on 2017-09-25]

## Description

### TECHNICAL FIELD

The present invention relates to macaroni and more specifically relates to dried macaroni having a hollow portion formed along a pasta body direction and including one or more circumferential wall portions which form a substantially circular cross-section of the pasta body and one or more hollow wall portions located inside the circumferential wall portions and forming a substantially circular shape.

### BACKGROUND ART

Apart from fresh pasta eaten just after being made, short pastas typified by macaroni are produced by adding water to durum semolina, hard flour or the like, kneading the mixture thereof, extrusion-molding the resulting dough at high pressure and then drying the molded dough. Therefore, dried short pastas obtained by such a method have a firmly compressed structure and requires a comparatively long time to boil them until they are brought into an eatable state. For example, even a hollow type of macaroni having an outer diameter of 4 to 5 mm and a thickness of about 1 mm requires a boiling time of almost 10 minutes in boiling water.

On the other hand, a quickly boilable type of macaroni is also commercially available but this type of macaroni is quickly boiled by reducing the outer diameter or the thickness. Accordingly, this type of macaroni is softer than an ordinary type of macaroni and cannot give a texture accompanied by heartiness inherent in macaroni.

Various methods have heretofore been proposed to solve the foregoing drawback of short pasta.

For example, Patent Literature 1 discloses macaroni capable of shortening the boiling time by forming a plurality of round-bottomed grooves in a hollow portion of the macaroni along its longitudinal direction. The thickness is reduced by the depth of the round-bottomed grooves, which enables boiling in a shorter time.

Patent Literature 2 and Patent Literature 3 each propose a quickly boilable type of macaroni having a previously pregelatinized surface and stored with water absorbed.

### CITATION LIST

### PATENT LITERATURE

Patent Literature 1: JP 2987650 B
Patent Literature 2: JP 9-191845 A
Patent Literature 3: JP 11-123 A

### SUMMARY OF INVENTION

### TECHNICAL PROBLEMS

However, the macaroni disclosed in Patent Literature 1 does not give a satisfactory texture because of a reduced thickness due to formation of the round-bottomed grooves.

In addition, the macaroni disclosed in each of Patent Literature 2 and Patent Literature 3 is stored in a water-absorbed state and hence has a deteriorated texture, is more likely to be subject to microbial growth during storage and cannot be stored for a long period of time as in dried pasta.

The present invention has been made to solve the conventional problems as described above and an object of the present invention is to provide macaroni capable of shortening the boiling time and getting an excellent texture after boiling.

### SOLUTION TO PROBLEMS

The present invention provides macaroni as claimed in claim 1.

The plurality of grooves can be configured to comprise, in the cross-section of the pasta body, first grooves extending from the circumferential wall portions toward the hollow wall portions.

The plurality of grooves can also be configured to comprise, in the cross-section of the pasta body, second grooves extending from the hollow wall portions toward the circumferential wall portions.

In addition, the plurality of grooves may comprise, in the cross-section of the pasta body, first grooves extending from the circumferential wall portions toward the hollow wall portions and second grooves extending from the hollow wall portions toward the circumferential wall portions.

Each of the circumferential wall portions positioned between the first grooves which are adjacent to each other can be configured to form a part of a circle in the cross-section of the pasta body. Each of the hollow wall portions positioned between the second grooves which are adjacent to each other can also be configured to form a part of a circle in the cross-section of the pasta body.

Each of the plurality of grooves has, in the cross-section of the pasta body, a cutting width in a radial direction which has a value of 32% to 60% with respect to a maximum thickness of the pasta body in the radial direction.

In addition, the plurality of grooves preferably extend, in the cross-section of the pasta body, at an angle of 95 to 175° with respect to openings of the grooves.

Furthermore, each of the plurality of grooves preferably has a groove width which gradually increases in a direction from a bottom portion toward an opening.

The plurality of grooves preferably have, in the cross-section of the pasta body, a cross-sectional area of 15 to 35% with respect to a cross-sectional area of the pasta body assuming that the plurality of grooves are not formed.

### ADVANTAGEOUS EFFECTS OF INVENTION

According to the invention, since a plurality of grooves formed along the pasta body direction have, in a cross-section of the pasta body, a cross-sectional shape extending in a spiral shape between one or more circumferential wall portions and one or more hollow wall portions and each of them has an opening width of 0.3 to 2.5 mm, shortening the boiling time and closing the plurality of grooves after boiling make it possible to obtain macaroni having heartiness comparable to that of an ordinary type of macaroni and also having an excellent texture.

### BRIEF DESCRIPTION OF DRAWINGS

[FIG. 1] FIG. 1 is a perspective view showing a piece of macaroni according to Embodiment 1 of the invention.
[FIG. 2] FIG. 2 is a cross-sectional view showing the piece of macaroni according to Embodiment 1.
[FIG. 3] FIG. 3 is a partially enlarged cross-sectional view showing the piece of macaroni according to Embodiment 1.
[FIG. 4] FIG. 4 is a graph showing the water absorption ratio of the macaroni according to Embodiment 1 in its thickness direction just after boiling.
[FIG. 5] FIG. 5 is a cross-sectional view showing a piece of macaroni according to a first modified example of Embodiment 1.
[FIGS. 6] FIG. 6(A) is a cross-sectional view showing a piece of macaroni according to a second modified example of Embodiment 1; and FIG. 6(B) is a cross-sectional view showing a piece of macaroni according to a third modified example of Embodiment 1.
[FIG. 7] FIG. 7 is a cross-sectional view showing a piece of macaroni according to a fourth modified example of Embodiment 1.
[FIG. 8] FIG. 8 is a cross-sectional view showing a piece of macaroni according to a fifth modified example of Embodiment 1.
[FIG. 9] FIG. 9 is a cross-sectional view showing a piece of macaroni according to a sixth modified example of Embodiment 1.
[FIG. 10] FIG. 10 is a cross-sectional view showing a piece of macaroni according to a seventh modified example of Embodiment 1.
[FIG. 11] FIG. 11 is a cross-sectional view showing a piece of macaroni according to Embodiment 2.
[FIG. 12] FIG. 12 is a graph showing the water absorption ratio of the macaroni according to Embodiment 2 in its thickness direction just after boiling.
[FIG. 13] FIG. 13 is a cross-sectional view showing a piece of macaroni according to a first modified example of Embodiment 2.
[FIG. 14] FIG. 14 is a cross-sectional view showing a piece of macaroni according to a second modified example of Embodiment 2.
[FIG. 15] FIG. 15 is a cross-sectional view showing a piece of macaroni according to a third modified example of Embodiment 2.
[FIG. 16] FIG. 16 is a cross-sectional view showing a piece of macaroni according to a fourth modified example of Embodiment 2.
[FIG. 17] FIG. 17 is a cross-sectional view showing a piece of macaroni according to Embodiment 3.
[FIG. 18] FIG. 18 is a graph showing the water absorption ratio of the macaroni according to Embodiment 3 in its thickness direction just after boiling.
[FIG. 19] FIG. 19 is a cross-sectional view showing a piece of macaroni according to a modified example of Embodiment 3.

### DESCRIPTION OF EMBODIMENTS

The present invention will be described below in detail based on preferred embodiments shown in the drawings.

### Embodiment 1

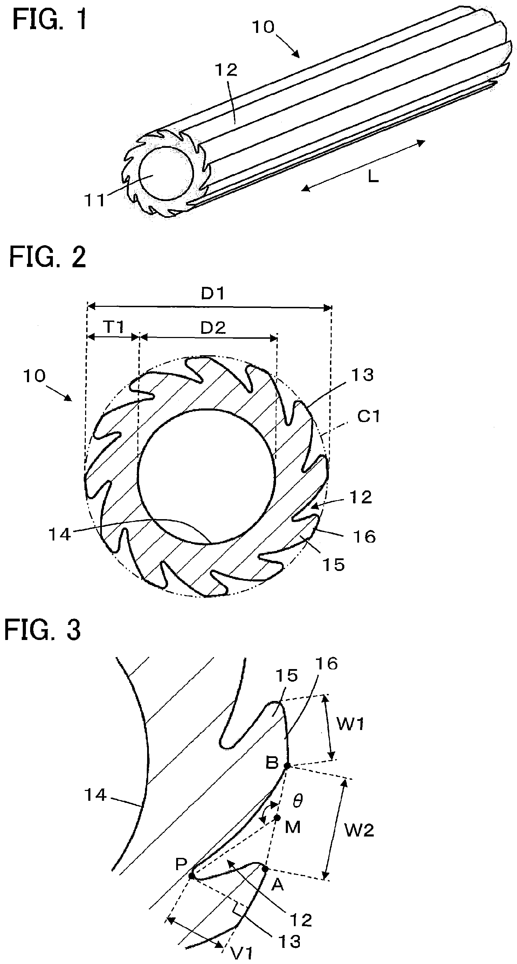

FIG. 1 shows a piece of macaroni 10 according to Embodiment 1 of the invention. The macaroni 10 is a dried pasta extending by a predetermined length in a pasta body direction shown by L in the drawing and includes a hollow portion 11 formed on the central axis of the macaroni 10 along the pasta body direction L and twelve grooves 12 formed in a circumferential portion of the macaroni 10 along the pasta body direction L.

As shown in FIG. 2, the pasta body of the macaroni 10 has, in its cross-section, circumferential wall portions 13 which form a substantially circular main profile. In other words, assuming that the twelve grooves 12 do not exist, the circumferential wall portions 13 form such a cross-sectional shape that substantially draws a circle C1. In addition, a substantially circular hollow wall portion 14 is formed inside the circumferential wall portions 13 concentrically with the circumferential wall portions 13 and the macaroni 10 has a substantially annular cross-sectional shape surrounded by the circumferential wall portions 13 and the hollow wall portion 14.

The respective twelve grooves 12 extend in a spiral shape from the circumferential wall portions 13 toward the hollow wall portion 14, have cross-sectional shapes which are identical to each other, and curve and incline in mutually the same rotational direction, and are disposed along the circumferential wall portions 13 at equal intervals.

By the presence of the grooves 12 as described above, twelve blade portions 15 which extend in a spiral shape from the inside of the pasta body toward the circumferential wall portions 13 are formed between the mutually adjacent grooves 12. Circumferential portions 16 of these blade portions 15 make up the circumferential wall portions 13.

It is to be noted that the diameter D1 of the circle C1 showing the main profile of the pasta body and the diameter D2 of the hollow wall portion 14 are set to 3.8 to 6.5 mm and 1.5 to 4.5 mm, respectively.

Furthermore, as shown in FIG. 3, each groove 12 has a groove width which gradually increases from a bottom portion P toward an opening portion. The circumferential portion 16 of each blade portion 15 has a width W1 set to 0.3 to 1.2 mm, each groove 12 has an opening width W2 set to 0.3 to 2.5 mm, and each groove 12 is formed at an angle θ set to 95 to 175°. The angle θ at which each groove 12 is formed is represented by the angle of a line segment MP with respect to a line segment AB when the line segment MP is drawn to the bottom portion P of the groove 12 from the midpoint M of the line segment AB connecting both ends A and B of the opening of the groove 12 with each other.

In addition, the cutting width V1 of each groove 12 represented by the shortest distance from the bottom portion P of the groove 12 to the circumferential wall portion 13 is set to 0.4 to 1.3 mm.

As is seen from FIG. 2, the maximum thickness T1 of the pasta body is represented by T1 = (D1 - D2) / 2 and is set to a value which is substantially the same as the wall thickness of a conventional type of macaroni having no grooves. It is to be noted that, in the macaroni 10 according to Embodiment 1, the cutting width V1 of each groove 12 has a value of 32% to 60% of the maximum thickness T1 of the pasta body.

The total cross-sectional area of the twelve grooves 12 is set to 15 to 35% with respect to the cross-sectional area of the annular pasta body assuming that the twelve grooves 12 do not exist.

The macaroni 10 as described above can be produced by extrusion-molding a pasta material using a die in which through-holes each having a shape corresponding to the cross-sectional shape of the pasta body shown in FIG. 2 are formed, and then drying the molded pasta material.

When the macaroni 10 is dropped into hot water at high temperature and boiled upon cooking, the hot water at high temperature comes into contact with the circumferential portion of the macaroni 10 while simultaneously penetrating into the hollow portion 11 formed along the central axis of the macaroni 10 to come into contact with the hollow wall portion 14 as well. Therefore, water and heat from the hot water at high temperature penetrate into the macaroni 10 from both the circumferential portion and the hollow portion 11 of the macaroni 10.

In addition, since the circumferential portion of the macaroni 10 has the twelve grooves 12 formed so as to extend in a spiral shape from the circumferential wall portions 13 toward the hollow wall portion 14, the hot water at high temperature also enters the interiors of these twelve grooves 12 to allow water and heat to penetrate into the pasta body also from the inner wall portions of the respective grooves 12. The circumferential portion of the macaroni 10 has a large surface area because of the presence of the twelve grooves 12 and hence water and heat are efficiently and rapidly absorbed into the pasta body from the circumferential portion of the macaroni 10.

As a result, the macaroni 10 can be boiled in a short time.

Furthermore, since the respective twelve grooves 12 extend in a spiral shape from the circumferential wall portions 13 toward the hollow wall portion 14 and the opening width W2 of the grooves 12 is set to 0.3 to 2.5 mm, when the macaroni 10 absorbs water and expands through boiling in hot water at high temperature, the twelve grooves 12 are easily closed and the circumferential portion of the macaroni 10 forms a substantially circular cross-sectional shape. Therefore, the same appearance and feeling on the tongue as those of macaroni having no grooves are obtained.

In addition, since the maximum wall thickness T1 of the macaroni 10 is set to substantially the same value as the wall thickness of macaroni having no grooves, an excellent texture can be obtained without compromising on the heartiness inherent in macaroni.

Furthermore, since the cutting width V1 of the grooves 12 is set to a value of 32% to 60% of the maximum wall thickness T1 of the macaroni 10, the macaroni 10 does not split or deform along the grooves 12 during or after boiling, and the grooves 12 can be reliably closed after boiling.

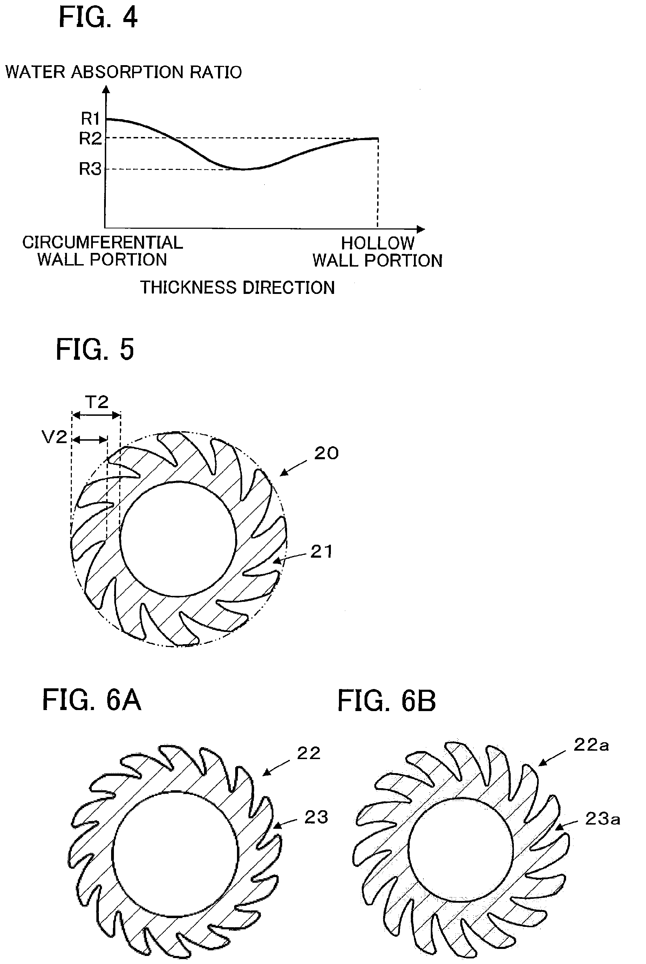

Since the twelve grooves 12 are formed from the circumferential wall portions 13 toward the hollow wall portion 14 in the macaroni 10 according to Embodiment 1 as described above, water and heat from the circumferential portion of the macaroni 10 are absorbed more efficiently and rapidly as compared to absorption of water and heat from the hollow portion 11. Therefore, the water absorption ratio distribution in the wall thickness direction as shown in FIG. 4 can be formed just after boiling. More specifically, in the wall thickness direction of the macaroni 10, while the vicinities of the circumferential wall portions 13 show the highest water absorption ratio R1, the vicinity of the hollow wall portion 14 shows a slightly lower water absorption ratio R2 than the circumferential wall portions 13 and the intermediate portion between the circumferential wall portions 13 and the hollow wall portion 14 shows the lowest water absorption ratio R3.

As a result, in addition to the heartiness, such a texture as to have specific softness on the circumferential wall portion side is obtained according to the water absorption ratio distribution as described above especially just after boiling while keeping firmness of the whole of the macaroni, thus achieving the macaroni having an elastic distribution in the wall thickness direction. Moreover, the water absorption ratio distribution of water becomes equilibrated with the passage of the time from just after boiling and hence the texture comparable to that of an ordinary type of macaroni can be obtained.

In the above-described macaroni 10, the cutting width V1 of the grooves 12 has a value of 32% to 60% of the maximum thickness T1 of the pasta body but this is not the sole case. As in macaroni 20 shown in FIG. 5, for example, each of grooves 21 may have a cutting width V2 which is larger than 60% of the maximum thickness T2 of the pasta body.

The larger the cutting width V1 of the grooves 12 and the cutting width V2 of the grooves 21 are, the more the surface area on the circumferential portion side increases. When macaroni is boiled in hot water at high temperature, absorption of water and heat from the circumferential portion of the macaroni is promoted, thus enabling further shortening of the boiling time. On the other hand, if the cutting width V1 of the grooves 12 and the cutting width V2 of the grooves 21 are too large with respect to the maximum thickness of the pasta body, the grooves are more likely to split during or after boiling.

Then, from the viewpoint of shortening the boiling time while preventing the grooves from splitting, the cutting width value of the grooves is 32% to 60%, preferably 32 to 55% and more preferably 35 to 50% with respect to the maximum thickness of the pasta body. When the cutting width value of the grooves is less than 30% with respect to the maximum thickness of the pasta body, the effect of shortening the boiling time is reduced, whereas when the cutting width value exceeds 60% with respect to the maximum thickness of the pasta body, macaroni is more likely to split.

The number of the grooves 12 and 21 is not limited to twelve and can be set to any number of more than one. As in macaroni 22 shown in FIG. 6(A), for example, sixteen grooves 23 may be formed so as to extend in a spiral shape from circumferential wall portions toward a hollow wall portion. With the highest priority placed on shortening the boiling time, the macaroni 22 having the sixteen grooves 23 may also be configured as in macaroni 22a shown in FIG. 6(B) so that each of grooves 23a has a larger cutting width than 60% of the maximum thickness of the pasta body.

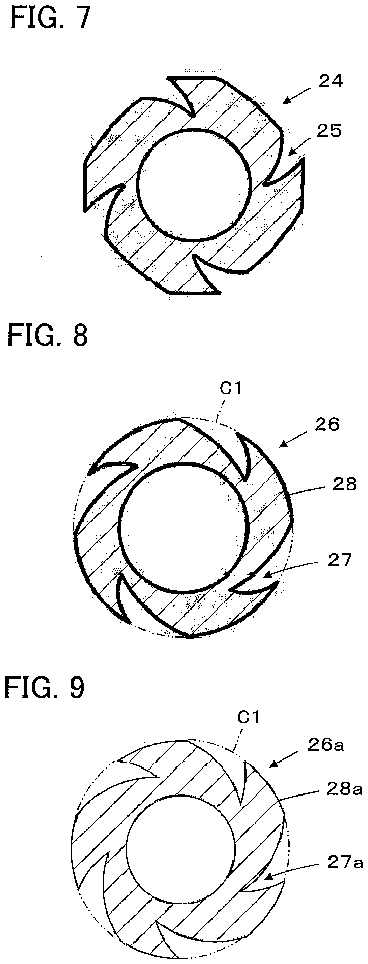

In addition, as in macaroni 24 shown in FIG. 7, four grooves 25 may be formed so as to extend in a spiral shape from circumferential wall portions toward a hollow wall portion.

In either case, by setting the groove opening width to 0.3 to 2.5 mm, the grooves can be closed at the end of boiling so that the circumferential portion of the macaroni may have a substantially circular cross-sectional shape. The groove opening width is more preferably 0.3 to 1.5 mm.

The macaroni may also be configured as in macaroni 26 shown in FIG. 8 so that each of circumferential wall portions 28 positioned between mutually adjacent, spiral-shaped grooves 27 forms, in a cross-section of the pasta body, a part of the circle C1 which constitutes the main profile of the pasta body. Such a configuration makes it possible not only to close the four grooves 27 at the end of boiling to form the circumferential portion of the macaroni 26 having a substantially circular cross-sectional shape but also to obtain a substantially circular appearance in cross-section even before boiling.

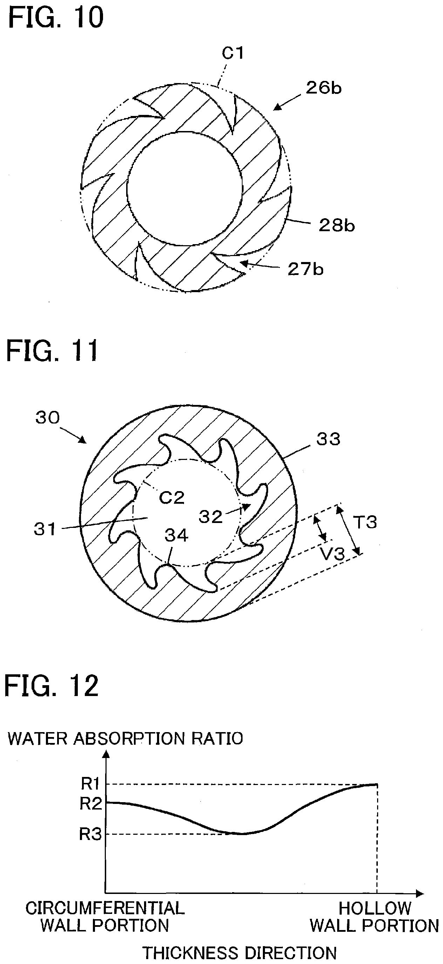

Also in this case, the number of the grooves 27 is not limited to four and as in macaroni 26a shown in FIG. 9, each of circumferential wall portions 28a positioned between five grooves 27a may form a part of the circle C1 which constitutes the main profile of the pasta body. Alternatively, as in macaroni 26b shown in FIG. 10, each of circumferential wall portions 28b positioned between six grooves 27b may form a part of the circle C1 which constitutes the main profile of the pasta body. In addition, the macaroni may also be configured to have two, three, or not less than seven grooves.

### Embodiment 2

FIG. 11 shows a cross-sectional view of a piece of macaroni 30 according to Embodiment 2. A hollow portion 31 is formed on the central axis of the macaroni 30 and eight grooves 32 are formed in the hollow portion 31. The pasta body of the macaroni 30 has, in its cross-section, a substantially circular circumferential wall portion 33 and also has, inside the circumferential wall portion 33, hollow wall portions 34 which form a substantially circular main profile and are concentric with the circumferential wall portion 33. In other words, assuming that the eight grooves 32 do not exist, the hollow wall portions 34 form such a cross-sectional shape that substantially draws a circle C2. The macaroni 30 has a substantially annular cross-sectional shape surrounded by the circumferential wall portion 33 and the hollow wall portions 34.

The respective eight grooves 32 extend in a spiral shape from the hollow wall portions 34 toward the circumferential wall portion 33, have cross-sectional shapes which are identical to each other, and curve and incline in mutually the same rotational direction, and are disposed along the hollow wall portions 34 at equal intervals.

As in the macaroni 10 according to Embodiment 1, the opening width of the respective grooves 32 is set to 0.3 to 2.5 mm and the total cross-sectional area of the eight grooves 32 is set to 15 to 35% with respect to the cross-sectional area of the pasta body assuming that the eight grooves 32 do not exist.

In addition, the cutting width V3 of the grooves 32 has a value of 32% to 60% of the maximum thickness T3 of the pasta body.

When the macaroni 30 is dropped into hot water at high temperature and boiled upon cooking, water and heat from the hot water at high temperature penetrate into the macaroni 30 from both the circumferential portion and the hollow portion 31 of the macaroni 30. Since the eight grooves 32 extending in a spiral shape from the hollow wall portions 34 toward the circumferential wall portion 33 are formed, the hot water at high temperature having entered the interior of the hollow portion 31 also enters the interiors of the eight grooves 32 to allow water and heat to penetrate into the pasta body also from the inner wall portions of the respective grooves 32. Therefore, water and heat are efficiently and rapidly absorbed into the pasta body from the hollow portion 31 of the macaroni 30, which makes it possible to boil the macaroni 30 in a short time.

Furthermore, since the respective eight grooves 32 extend in a spiral shape from the hollow wall portions 34 toward the circumferential wall portion 33 and the opening width of the grooves 32 is set to 0.3 to 2.5 mm, when the macaroni 30 absorbs water and expands through boiling in hot water at high temperature, the eight grooves 32 are easily closed and the hollow wall portions 34 form a substantially circular cross-sectional shape. Therefore, the same appearance and feeling on the tongue as those of macaroni having no grooves are obtained. The groove opening width is more preferably 0.3 to 1.5 mm.

In addition, by setting the maximum wall thickness T3 of the macaroni 30 at substantially the same value as the wall thickness of macaroni having no grooves, an excellent texture can be obtained without compromising on the heartiness inherent in macaroni.

Furthermore, since the cutting width V3 of the grooves 32 with respect to the maximum wall thickness T3 of the macaroni 30 is set to a value of 32% to 60%, the macaroni 30 does not split or deform along the grooves 32 during or after boiling, and the grooves 32 can be reliably closed after boiling.

Since the eight grooves 32 are formed from the hollow wall portions 34 toward the circumferential wall portion 33 in the macaroni 30 according to Embodiment 2, water and heat from the hollow portion 31 of the macaroni 30 are absorbed more efficiently and rapidly as compared to absorption of water and heat from the circumferential portion. Therefore, the water absorption ratio distribution in the wall thickness direction as shown in FIG. 12 can be formed just after boiling. More specifically, in the wall thickness direction of the macaroni 30, while the vicinities of the hollow wall portions 34 show the highest water absorption ratio R1, the vicinity of the circumferential wall portion 33 shows a slightly lower water absorption ratio R2 than the hollow wall portions 34, and the intermediate portion between the circumferential wall portion 33 and the hollow wall portions 34 shows the lowest water absorption ratio R3.

As a result, in addition to the heartiness, such a texture as to have softness and distinctive chewiness on the hollow wall portion side is obtained according to the water absorption ratio distribution as described above especially just after boiling while keeping firmness of the whole of the macaroni, thus achieving the macaroni having an elastic distribution in the wall thickness direction. Moreover, the water absorption ratio distribution of water becomes equilibrated with the passage of the time from just after boiling and hence the texture comparable to that of an ordinary type of macaroni can be obtained.

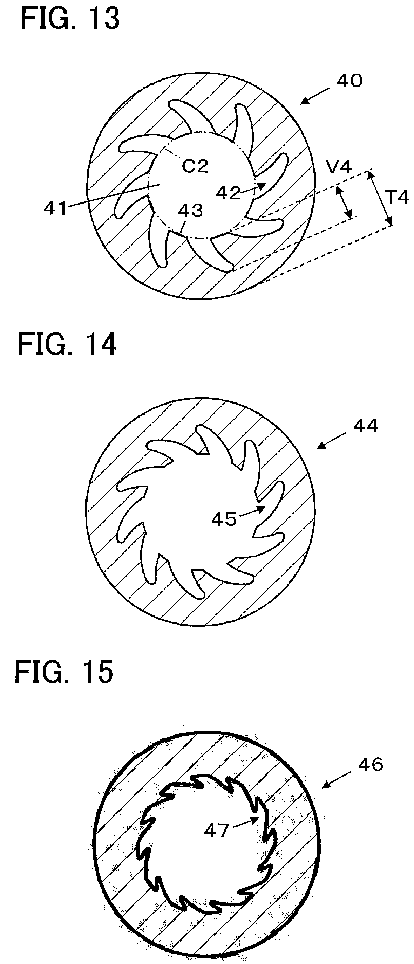

In the above-described macaroni 30, the cutting width V3 of the grooves 32 has a value of 32% to 60% of the maximum thickness T3 of the pasta body but this is not the sole case. As in macaroni 40 shown in FIG. 13, for example, each of grooves 42 may have a cutting width V4 which is larger than 60% of the maximum thickness T4 of the pasta body.

The larger the cutting width V3 of the grooves 32 with respect to the maximum wall thickness T3 of the macaroni 30 and the cutting width V4 of the grooves 42 with respect to the maximum wall thickness T4 of the macaroni 40 are, the more the surface areas on the side on which the hollow portions 31 and 41 are formed, respectively, increase. When macaroni is boiled in hot water at high temperature, absorption of water and heat from the hollow portion of the macaroni is promoted, thus enabling further shortening of the boiling time. On the other hand, if the cutting width V3 of the grooves 32 and the cutting width V4 of the grooves 42 are too large, the grooves are more likely to split during or after boiling.

Then, from the viewpoint of shortening the boiling time while preventing the grooves from splitting, the cutting width value of the grooves is 32% to 60%, preferably 32 to 55% and more preferably 35 to 50% with respect to the maximum thickness of the pasta body. When the cutting width value of the grooves is less than 30% with respect to the maximum thickness of the pasta body, the effect of shortening the boiling time is reduced, whereas when the cutting width value exceeds 60% with respect to the maximum thickness of the pasta body, macaroni is more likely to split.

The macaroni 40 shown in FIG. 13 is configured so that each of hollow wall portions 43 positioned between the mutually adjacent, spiral-shaped grooves 42 forms, in a cross-section of the pasta body, a part of the circle C2 which constitutes the profile of the hollow portion 41.

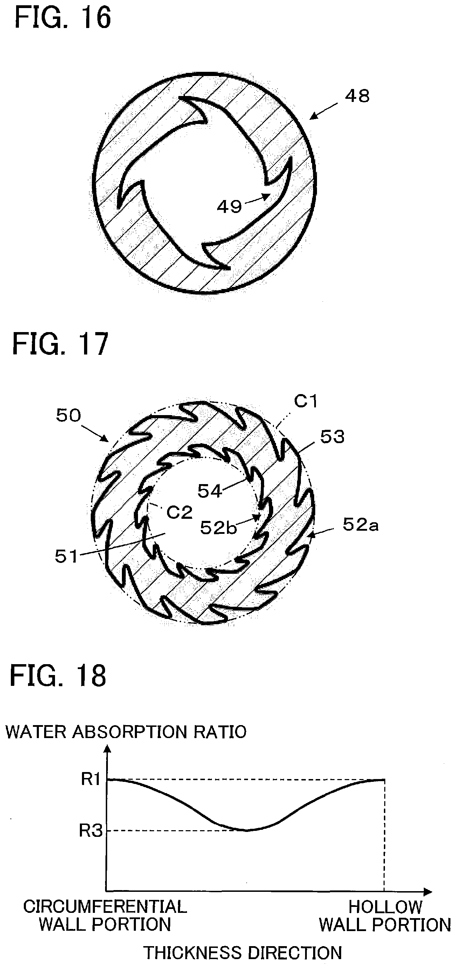

The number of the grooves 32 and 42 is not limited to 8 and can be set to any number of more than one. For example, ten grooves 45 may be formed so as to extend in a spiral shape from hollow wall portions toward a circumferential wall portion as in macaroni 44 shown in FIG. 14 or twelve grooves 47 may be formed so as to extend in a spiral shape from hollow wall portions toward a circumferential wall portion as in macaroni 46 shown in FIG. 15. Alternatively four grooves 49 may be formed so as to extend in a spiral shape from hollow wall portions toward a circumferential wall portion as in macaroni 48 shown in FIG. 16.

In either case, by setting the groove opening width to 0.3 to 2.5 mm, the grooves can be closed at the end of boiling so that the hollow wall portions of the macaroni may form a substantially circular cross-sectional shape. The groove opening width is more preferably 0.3 to 1.5 mm.

### Embodiment 3

FIG. 17 shows a cross-sectional view of a piece of macaroni 50 according to Embodiment 3. The macaroni 50 has a hollow portion 51 formed on its central axis, twelve grooves 52a formed in its circumferential portion and twelve grooves 52b formed in the hollow portion 51. The pasta body of the macaroni 50 has, in its cross-section, circumferential wall portions 53 which form a substantially circular main profile and also has, inside the circumferential wall portions 53, hollow wall portions 54 which form a substantially circular main profile and are concentric with the circumferential wall portions 53. In other words, assuming that the twelve grooves 52a do not exist, the circumferential wall portions 53 form such a cross-sectional shape that substantially draws a circle C1, and assuming that the twelve grooves 52b do not exist, the hollow wall portions 54 form such a cross-sectional shape that substantially draws a circle C2. The macaroni 50 has a substantially annular cross-sectional shape surrounded by the circumferential wall portions 53 and the hollow wall portions 54.

The twelve grooves 52a extend in a spiral shape from the circumferential wall portions 53 toward the hollow wall portions 54, have cross-sectional shapes which are identical to each other, and curve and incline in mutually the same rotational direction, and are disposed along the circumferential wall portions 53 at equal intervals. On the other hand, the twelve grooves 52b extend in a spiral shape from the hollow wall portions 54 toward the circumferential wall portions 53, have cross-sectional shapes which are identical to each other, and curve and incline in mutually the same rotational direction, and are disposed along the hollow wall portions 54 at equal intervals.

The opening widths of the grooves 52a and 52b are set to 0.3 to 2.5 mm, respectively, and the total cross-sectional area of the twelve grooves 52a and the twelve grooves 52b is set to 15 to 35% with respect to the cross-sectional area of the pasta body assuming that these grooves 52a and 52b do not exist.

When the macaroni 50 is dropped into hot water at high temperature and boiled upon cooking, water and heat from the hot water at high temperature penetrate into the macaroni 50 from both the circumferential portion and the hollow portion 51 of the macaroni 50. Since the twelve grooves 52a extending in a spiral shape from the circumferential wall portions 53 toward the hollow wall portions 54 are formed and the twelve grooves 52b extending in a spiral shape from the hollow wall portions 54 toward the circumferential wall portions 53 are also formed, the hot water at high temperature also enters the interiors of the grooves 52a and 52b to allow water and heat to penetrate into the pasta body also from the inner wall portions of the respective grooves 52a and 52b. Therefore, water and heat are efficiently and rapidly absorbed into the pasta body from both the circumferential portion and the hollow portion 51 of the macaroni 50, which makes it possible to boil the macaroni 50 in a short time.

Furthermore, since the respective twelve grooves 52a extend in a spiral shape from the circumferential wall portions 53 toward the hollow wall portions 54, the respective twelve grooves 52b extend in a spiral shape from the hollow wall portions 54 toward the circumferential wall portions 53, and the opening widths of these grooves 52a and 52b are set to 0.3 to 2.5 mm, when the macaroni 50 absorbs water and expands through boiling in hot water at high temperature, the respective grooves 52a and 52b are easily closed, and the circumferential wall portions 53 and the hollow wall portions 54 form substantially circular cross-sectional shapes, respectively. Therefore, the same appearance and feeling on the tongue as those of macaroni having no grooves are obtained.

In addition, by setting the maximum wall thickness of the macaroni 50 at substantially the same value as the wall thickness of macaroni having no grooves, an excellent texture can be obtained without compromising on the heartiness inherent in macaroni.

Since the twelve grooves 52a are formed from the circumferential wall portions 53 toward the hollow wall portions 54 and the twelve grooves 52b are formed from the hollow wall portions 54 toward the circumferential wall portions 53 in the macaroni 50 according to Embodiment 3 as described above, water and heat from the circumferential portion of the macaroni 50, and water and heat from the hollow portion 51 of the macaroni 50 are absorbed efficiently and rapidly. Therefore, at the end of boiling, a water absorption ratio distribution can be formed which shows, in the wall thickness direction of the macaroni 50, a high water absorption ratio R1 in both the vicinities of the circumferential wall portions 53 and the vicinities of the hollow wall portions 54, and a low water absorption ratio R3 in the intermediate portion between the circumferential wall portions 53 and the hollow wall portions 54, as shown in FIG. 18.

As a result, macaroni having not only the heartiness but also an elastic distribution according to the water absorption ratio distribution as described above is realized. For example, adjustment of the boiling time makes it possible to obtain macaroni having a more chewy texture toward the center of the wall thickness as compared to a conventional type of macaroni having no grooves, although the surface is very soft.

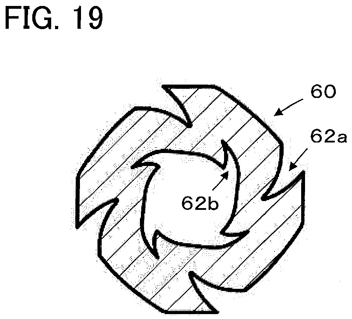

Each of the numbers of the grooves 52a and 52b is not limited to 12 and can be set to any number of more than one. For example, four grooves 62a may be formed so as to extend in a spiral shape from circumferential wall portions toward hollow wall portions and four grooves 62b may be formed so as to extend in a spiral shape from the hollow wall portions toward the circumferential wall portions as in macaroni 60 shown in FIG. 19. In addition, the same effect can be obtained even if the number of grooves extending from the circumferential wall portions toward the hollow wall portions and the number of grooves extending from the hollow wall portions toward the circumferential wall portions are different from each other.

Also in this case, by setting the groove opening width to 0.3 to 2.5 mm, the grooves can be closed at the end of boiling so that the circumferential portion and the hollow wall portions of the macaroni may each form a substantially circular cross-sectional shape. The groove opening width is more preferably 0.3 to 1.5 mm.

### EXAMPLES

Macaroni samples each having a plurality of grooves in the circumferential portion like the macaroni 10 shown in FIG. 2 were prepared by variously changing the diameter D1 of the circle showing the main profile of the pasta body, the diameter D2 of the hollow wall portion, the cutting width V1 of the grooves, the opening width W2 of the grooves, and the number of the grooves.

To be more specific, 26 parts by weight of water was mixed with 100 parts by weight of durum wheat semolina flour and the mixture was kneaded to form a dough. The dough was extruded through a die shaped to have various types of grooves under a reduced pressure condition of -80 kPa (-600 mmHg) using a pasta manufacturing machine and cut into lengths of 3 cm. The resulting macaroni samples were dried to obtain dried macaroni samples in Preparation Examples 1 to 7 each having dimensions in Table 1.

**[Table 1]**

| Table 1 | | | | | | | | |
|---|---|---|---|---|---|---|---|---|
| | Preparation Example 1 | Preparation Example 2 | Preparation Example 3 | Preparation Example 4 | Preparation Example 5 | Preparation Example 5 | Preparation Example 6 | Preparation Example 7 |
| D1 (mm) | 5.0 | 5.0 | 5.0 | 5.0 | 5.0 | 5.0 | 5.0 | 5.0 |
| D2 (mm) | 3.0 | 3.0 | 3.0 | 3.0 | 3.0 | 3.0 | 3.0 | 3.0 |
| V1 (mm) | 0.4 | 0.4 | 0.4 | 0.4 | 0.65 | 0.4 | 0.4 | 0.4 |
| W2 (mm) | 0.2 | 0.3 | 0.9 | 1.5 | 1.5 | 2.5 | 2.8 | 2.8 |
| Number of grooves (number) | 12 | 12 | 12 | 12 | 12 | 12 | 12 | 8 |
| Boiling time | 8 minutes 00 second | 6 minutes 00 second | 3 minutes 50 seconds | 2 minutes 40 seconds | 2 minutes 25 seconds | 2 minutes 5 seconds | 1 minute 55 seconds | 2 minutes 15 seconds |
| Texture just after boiling | 4.7 | 4.5 | 4.2 | 4.0 | 3.7 | 3.0 | 1.6 | 1.9 |
| Texture after passage of 1 hour | 4.0 | 3.8 | 3.1 | 2.7 | 2.6 | 2.4 | 1.2 | 1.5 |
| Groove joint portion | 3.2 | 4.0 | 4.5 | 4.1 | 3.6 | 3.3 | 1.8 | 2.1 |
| Groove split | No | No | No | No | Yes | No | No | No |

Each of Preparation Examples 2 to 5 has a groove opening width W2 set in a range of 0.3 to 2.5 mm and constitutes an example of the invention, whereas each of the other examples, i.e., Preparation Examples 1, 6 and 7 has a groove opening width W2 outside the range of 0.3 to 2.5 mm and constitutes a comparative example over the invention. In Preparation Examples 1 to 7, the groove cutting width V1 is set to 40% of the macaroni wall thickness (1 mm).

The dried macaroni samples in Preparation Examples 1 to 7 as described above were successively dropped into a 2-liter pot in respective amounts of 100 g, and boiled in hot water until they were brought into an eatable state, and the boiling time was then measured. The average of ten samples was determined in each Preparation Example and the results are shown in Table 1. Then, the boiled macaroni samples were divided into halves and 10 panelists evaluated the texture just after boiling and the texture after the passage of 1 hour according to the evaluation criteria shown in Table 2. The average results are shown in Table 1.

### [Table 2]

**Table 2**

| | | |
|---|---|---|
| Texture just after boiling | Rank | State |
| | 5 | Having softness at the start of chewing along with internal elasticity and rated as very good |
| | 4 | Having softness at the start of chewing along with internal elasticity and rated as good |
| | 3 | Having slightly low softness at the start of chewing along with slightly low internal elasticity and rated as slightly poor |
| | 2 | Having slightly too hard or soft texture at the start of chewing along with low internal elasticity and rated as poor |
| | 1 | Having too hard or soft texture at the start of chewing, lacking in elasticity and rated as very poor |
| Texture after passage of 1 hour | Rank | State |
| | 5 | Having sufficient elasticity and rated as vergy good |
| | 4 | Having elasticity and rated as good |
| | 3 | Having slightly low elasticity and rated as slightly poor |
| | 2 | Having low elasticity and rated as poor |
| | 1 | Lacking in elasticity and rated as very poor |

Moreover, water was sufficiently removed from the surfaces of the boiled macaroni samples, and 10 macaroni samples were extracted and evaluated for the groove joint portions according to the evaluation criteria in Table 3. The average results are shown in Table 1. Whether or not each groove portion split was checked and the results are shown in Table 1.

| | | |
|---|---|---|
| [Table 3] | | |
| Groove joint portion | Rank | State |
| | 5 | Grooves are closed and no difference in level cannot be visually confirmed |
| | 4 | Grooves are closed and differences in level can be confirmed at a part of groove portions |
| | 3 | Grooves are closed but differences in level can be confirmed at some groove portions |
| | 2 | Grooves are not closed partially or differences in level can be confirmed at many groove portions |
| | 1 | Not less than half of grooves are not closed or differences in level can be confirmed at all groove portions |

In each of Preparation Examples 1 to 7, 10 macaroni samples were evaluated and the results are shown in Table 1.

As for the evaluation of the texture and the groove joint portions, the macaroni in each of Preparation Examples 2 to 5 in which the groove opening width W2 was set in the range of 0.3 to 2.5 mm was rated high in both the texture just after boiling and the texture after the passage of 1 hour, but the macaroni in each of Preparation Examples 6 and 7 in which the groove opening width W2 exceeded 2.5 mm was poor because the rank dropped to on the order of 1. On the other hand, as for the effect of shortening the boiling time, the macaroni in each of Preparation Examples 2 to 5 in which the groove opening width W2 was set in the range of 0.3 to 2.5 mm was obtained within 6 minutes as compared to macaroni of the same size having no grooves of which the boiling time was 9 minutes, thus achieving a sufficient shortening effect. However, in Preparation Example 1 in which the groove opening width W2 was less than 0.3 mm, the boiling time was comparable to that of macaroni having no grooves and there was hardly any time shortening effect.

In addition, as a result of tasting the macaroni in Preparation Example 1 taken out at a boiling time of 6 minutes, it was not sufficiently boiled and had a hard texture.

### DESCRIPTION OF SYMBOLS

10, 20, 22, 22a, 24, 26, 26a, 26b, 30, 40, 44, 46, 48, 50, 60 macaroni;
11, 31, 41, 51 hollow portions;
12, 21, 23, 23a, 25, 27, 27a, 27b, 32, 42, 45, 47, 49, 52a, 52b, 62a, 62b grooves;
13, 28, 28a, 28b, 33, 53 circumferential wall portions;
14, 34, 43, 54 hollow wall portions;
15 blade portion;
16 circumferential portion;
L pasta body direction;
C1, C2 circles;
D1 diameter of the main profile of the pasta body;
D2 diameter of the hollow wall portion;
W1 width of the circumferential portion of each blade portion;
W2 groove opening width;
A, B ends of the groove opening;
M midpoint;
P bottom portion of each groove;
θ groove formation angle;
V1, V2, V3, V4 groove cutting width;
T1, T2, T3, T4 maximum thickness of the pasta body;
R1, R2, R3 water absorption ratio

## Claims

1. Macaroni (10; 30; 50):
- having a hollow portion (11; 31; 51) formed along a pasta body direction (L) and
- comprising:
o circumferential wall portion (33) or circumferential wall portions (13; 53) which form a substantially circular cross-sectional shape of a pasta body and
o hollow wall portion (14) or hollow wall portions (34; 54) located inside the circumferential wall portion (33) or circumferential wall portions (13; 53) and forming a substantially circular shape,
wherein a plurality of grooves (12; 32; 52a; 52b) are formed along the pasta body direction (L), and
wherein the plurality of grooves (12; 32; 52a; 52b) have, in a cross-section of the pasta body, a cross-sectional shape extending in a spiral shape between the circumferential wall portion (33) or circumferential wall portions (13; 53) and the hollow wall portion (14) or hollow wall portions (34; 54) and each have an opening width (W2) of 0.3 to 2.5 mm,
wherein each of the plurality of grooves (12; 32; 52a; 52b) has, in the cross-section of the pasta body, a cutting width (V1) in a radial direction which has a value of 32% to 60% with respect to a maximum thickness (T1) of the pasta body in the radial direction, the cutting width (V1) being the shortest distance from the bottom portion P of the groove (12; 32; 52a; 52b) to the circumferential wall portion (13; 33; 53).

2. The macaroni (10) according to claim 1, wherein the plurality of grooves (12) comprise, in the cross-section of the pasta body, first grooves extending from the circumferential wall portions (13) toward the hollow wall portion (14).

3. The macaroni (30) according to claim 1, wherein the plurality of grooves (32) comprise, in the cross-section of the pasta body, second grooves extending from the hollow wall portions (34) toward the circumferential wall portion (33).

4. The macaroni (50) according to claim 1, wherein the plurality of grooves (52a; 52b) comprise, in the cross-section of the pasta body, first grooves extending from the circumferential wall portions (53) toward the hollow wall portions (54) and second grooves extending from the hollow wall portions (54) toward the circumferential wall portions (53).

5. The macaroni (10; 50) according to claim 2 or 4, wherein each of the circumferential wall portions (13; 53) positioned between the first grooves which are adjacent to each other forms a part of a circle in the cross-section of the pasta body.

6. The macaroni (30; 50) according to claim 3 or 4, wherein each of the hollow wall portions (34; 54) positioned between the second grooves which are adjacent to each other forms a part of a circle in the cross-section of the pasta body.

7. The macaroni (10; 30; 50) according to any one of claims 1 to 6, wherein each of the plurality of grooves (12; 32; 52a; 52b) has, in the cross-section of the pasta body, a cutting width (V1) in a radial direction which has a value of 32% to 55% with respect to a maximum thickness (T1) of the pasta body in the radial direction, the cutting width (V1) being the shortest distance from the bottom portion P of the groove (12; 32; 52a; 52b) to the circumferential wall portion (13; 33; 53).

8. The macaroni (10; 30; 50) according to any one of claims 1 to 7, wherein the plurality of grooves (12; 32; 52a; 52b) extend, in the cross-section of the pasta body, at an angle θ of 95 to 175° with respect to openings of the grooves (12; 32; 52a; 52b), the angle θ being the angle of a line segment MP with respect to a line segment AB when the line segment MP is drawn to the bottom portion P of the groove (12; 32; 52a; 52b) from the midpoint M of the line segment AB connecting both ends A and B of the opening of the groove (12; 32; 52a; 52b) with each other.

9. The macaroni (10; 30; 50) according to any one of claims 1 to 8, wherein each of the plurality of grooves (12; 32; 52a; 52b) has a groove width which gradually increases in a direction from a bottom portion P toward an opening.

10. The macaroni (10; 30; 50) according to any one of claims 1 to 9, wherein the plurality of grooves (12; 32; 52a; 52b) have, in the cross-section of the pasta body, a cross-sectional area of 15 to 35% with respect to a cross-sectional area of the pasta body assuming that the plurality of grooves (12; 32; 52a; 52b) are not formed.

## Patentansprüche

1. Makkaroni (10; 30; 50):
- mit einem hohlen Abschnitt (11; 31; 51), der entlang einer Pastakörperrichtung (L) ausgebildet ist, und
- umfassend:
einen Umfangswandabschnitt (33) oder Umfangswandabschnitte (13; 53), die eine im Wesentlichen kreisförmige Querschnittsform eines Pastakörpers bilden, und
einen hohlen Wandabschnitt (14) oder hohle Wandabschnitte (34; 54), die sich in dem Umfangswandabschnitt (33) oder den Umfangswandabschnitten (13; 53) befinden und im Wesentlichen eine Kreisform bilden,
wobei eine Vielzahl von Rillen (12; 32; 52a; 52b) die Pastakörperrichtung (L) entlang ausgebildet sind, und wobei die Vielzahl von Rillen (12; 32; 52a; 52b) im Querschnitt des Pastakörpers eine Querschnittsform aufweisen, die in einer Spiralform zwischen dem Umfangswandabschnitt (33) oder den Umfangswandabschnitten (13; 53) und dem hohlen Wandabschnitt (14) oder den hohlen Wandabschnitten (34; 54) verläuft und sie jeweils eine Öffnungsbreite (W2) von 0,3 bis 2,5 mm aufweisen,
wobei jede von der Vielzahl von Rillen (12; 32; 52a; 52b) im Querschnitt des Pastakörpers eine Schneidbreite (V1) in einer radialen Richtung aufweist, die einen Wert von 32% bis 60% bezogen auf eine Höchstdicke (T1) des Pastakörpers in der radialen Richtung aufweist, wobei die Schneidbreite (V1) der kürzeste Abstand vom unteren Abschnitt P der Rille (12; 32; 52a; 52b) zum Umfangswandabschnitt (13; 33; 53) ist.

2. Makkaroni (10) nach Anspruch 1, wobei die Vielzahl von Rillen (12) im Querschnitt des Pastakörpers erste Rillen umfasst, die von den Umfangswandabschnitten (13) aus in Richtung des hohlen Wandabschnitts (14) verlaufen.

3. Makkaroni (30) nach Anspruch 1, wobei die Vielzahl von Rillen (32) im Querschnitt des Pastakörpers zweite Rillen umfasst, die von den hohlen Wandabschnitten (34) aus in Richtung des Umfangswandabschnitts (33) verlaufen.

4. Makkaroni (50) nach Anspruch 1, wobei die Vielzahl von Rillen (52a; 52b) im Querschnitt des Pastakörpers erste Rillen, die von den Umfangswandabschnitten (53) aus in Richtung der hohlen Wandabschnitte (54) verlaufen, und zweite Rillen umfasst, die von den hohlen Wandabschnitten (54) aus in Richtung der Umfangswandabschnitte (53) verlaufen.

5. Makkaroni (10; 50) nach Anspruch 2 oder 4, wobei jeder von den Umfangswandabschnitten (13; 53), die zwischen den ersten Rillen platziert sind, die nebeneinanderliegen, einen Teil eines Kreises im Querschnitt des Pastakörpers bildet.

6. Makkaroni (30; 50) nach Anspruch 3 oder 4, wobei jeder von den hohlen Wandabschnitten (34; 54), die zwischen den zweiten Rillen platziert sind, die nebeneinanderliegen, einen Teil eines Kreises im Querschnitt des Pastakörpers bildet.

7. Makkaroni (10; 30; 50) nach einem der Ansprüche 1 bis 6, wobei jede von der Vielzahl von Rillen (12; 32; 52a; 52b) im Querschnitt des Pastakörpers eine Schneidbreite (V1) in einer radialen Richtung aufweist, die einen Wert von 32% bis 55% bezogen auf eine Höchstdicke (T1) des Pastakörpers in der radialen Richtung aufweist, wobei die Schneidbreite (V1) der kürzeste Abstand vom unteren Abschnitt P der Rille (12; 32; 52a; 52b) zum Umfangswandabschnitt (13; 33; 53) ist.

8. Makkaroni (10; 30; 50) nach einem der Ansprüche 1 bis 7, wobei die Vielzahl von Rillen (12; 32; 52a; 52b) im Querschnitt des Pastakörpers unter einem Winkel θ von 95 bis 175° bezogen auf Öffnungen der Rillen (12; 32; 52a; 52b) verläuft, wobei der Winkel θ der Winkel eines Liniensegments MP bezogen auf ein Liniensegment AB ist, wenn das Liniensegment MP zum unteren Abschnitt P der Rille (12; 32; 52a; 52b) hinunter vom Mittelpunkt M des Liniensegments AB aus gezogen wird, das beide Enden A und B der Öffnung der Rille (12; 32; 52a; 52b) miteinander verbindet.

9. Makkaroni (10; 30; 50) nach einem der Ansprüche 1 bis 8, wobei jede von der Vielzahl von Rillen (12; 32; 52a; 52b) eine Rillenbreite aufweist, die in einer Richtung von einem unteren Abschnitt P aus in Richtung einer Öffnung allmählich zunimmt.

10. Makkaroni (10; 30; 50) nach einem der Ansprüche 1 bis 9, wobei die Vielzahl von Rillen (12; 32; 52a; 52b) im Querschnitt des Pastakörpers eine Querschnittsfläche von 15 bis 35% bezogen auf eine Querschnittsfläche des Pastakörpers aufweist, wenn angenommen würde, dass die Vielzahl von Rillen (12; 32; 52a; 52b) nicht ausgebildet ist.

## Revendications

1. Macaroni (10 ; 30 ; 50) :
- ayant une partie creuse (11 ; 31 ; 51), formée le long d'une direction (L) du corps de la pâte et comprenant :
∘ une partie formant paroi circonférentielle (33) ou des parties formant parois circonférentielles (13 ; 53), qui constituent une forme en coupe transversale sensiblement circulaire du corps d'une pâte et
∘ une partie formant paroi creuse (14) ou des parties formant parois creuses (34 ; 54), situées à l'intérieur de la partie formant paroi circonférentielle (33) ou des parties formant parois circonférentielles (13 ; 53) et constituant une forme sensiblement circulaire,
dans lequel une pluralité de rainures (12 ; 32 ; 52a ; 52b) est formée le long de la direction (L) du corps de la pâte et
dans lequel la pluralité de rainures (12 ; 32 ; 52a ; 52b) a, en coupe transversale du corps de la pâte, une forme en coupe transversale qui s'étend en forme de spirale entre la partie formant paroi circonférentielle (33) ou les parties formant parois circonférentielles (13 ; 53) et la partie formant paroi creuse (14) ou les parties formant parois creuses (34 ; 54) et chaque rainure a une largeur d'ouverture (W2) de 0,3 à 2,5 mm,
dans lequel chaque rainure parmi la pluralité de rainures (12 ; 32 ; 52a ; 52b) a, en coupe transversale du corps de la pâte, une largeur de coupe (V1) dans une direction radiale, qui a une valeur de 32 % à 60 % par rapport à une épaisseur maximale (T1) du corps de la pâte dans la direction radiale, la largeur de coupe (V1) étant la distance la plus courte depuis la partie de fond P de la rainure (12 ; 32 ; 52a ; 52b) à la partie formant paroi circonférentielle (13 ; 33 ; 53).

2. Macaroni (10) selon la revendication 1, dans lequel la pluralité de rainures (12) comprend, en coupe transversale du corps de la pâte, des premières rainures, qui s'étendent depuis les parties formant parois circonférentielles (13) vers la partie formant paroi creuse (14).

3. Macaroni (30) selon la revendication 1, dans lequel la pluralité de rainures (32) comprend, en coupe transversale du corps de la pâte, des secondes rainures, qui s'étendent depuis les parties formant parois creuses (34) vers la partie formant paroi circonférentielle (33).

4. Macaroni (50) selon la revendication 1, dans lequel la pluralité de rainures (52a ; 52b) comprend, en coupe transversale du corps de la pâte, des premières rainures, qui s'étendent depuis les parties formant parois circonférentielles (53) vers les parties formant parois creuses (54) et des secondes rainures, qui s'étendent depuis les parties formant parois creuses (54) vers les parties formant parois circonférentielles (53).

5. Macaroni (10 ; 50) selon la revendication 2 ou 4, dans lequel chacune des parties formant parois circonférentielles (13 ; 53), positionnées entre les premières rainures qui sont adjacentes entre elles, forme une partie d'un cercle en coupe transversale du corps de la pâte.

6. Macaroni (10 ; 50) selon la revendication 3 ou 4, dans lequel chacune des parties formant parois creuses (34 ; 54), positionnées entre les secondes rainures qui sont adjacentes entre elles, forme une partie d'un cercle en coupe transversale du corps de la pâte.

7. Macaroni (10 ; 30 ; 50) selon l'une quelconque des revendications 1 à 6, dans lequel chaque rainure parmi la pluralité de rainures (12 ; 32 ; 52a ; 52b) a, en coupe transversale du corps de la pâte, une largeur de coupe (V1) dans une direction radiale, qui a une valeur de 32 % à 55 % par rapport à une épaisseur maximale (T1) du corps de la pâte dans la direction radiale, la largeur de coupe (V1) étant la distance la plus courte depuis la partie de fond P de la rainure (12 ; 32 ; 52a ; 52b) vers la partie formant paroi circonférentielle (13 ; 33 ; 53).

8. Macaroni (10 ; 30 ; 50) selon l'une quelconque des revendications 1 à 7, dans lequel la pluralité de rainures (12 ; 32 ; 52a ; 52b) s'étend, en coupe transversale du corps de la pâte, suivant un angle θ de 95 à 175° par rapport à des ouvertures des rainures (12 ; 32 ; 52a ; 52b), l'angle θ étant l'angle d'un segment de droite MP par rapport à un segment de droite AB, lorsque le segment de droite MP est tracé vers la partie de fond P de la rainure (12 ; 32 ; 52a ; 52b) depuis le point médian M du segment de droite AB reliant les deux extrémités A et B de l'ouverture de la rainure (12 ; 32 ; 52a ; 52b) entre elles.

9. Macaroni (10 ; 30 ; 50) selon l'une quelconque des revendications 1 à 8, dans lequel chaque rainure parmi la pluralité de rainures (12 ; 32 ; 52a ; 52b) a une largeur de rainure qui augmente progressivement dans une direction depuis une partie de fond P vers une ouverture.

10. Macaroni (10 ; 30 ; 50) selon l'une quelconque des revendications 1 à 9, dans lequel la pluralité de rainures (12 ; 32 ; 52a ; 52b) a, en coupe transversale du corps de la pâte, une section de 15 à 35 % par rapport à une section du corps de la pâte, en supposant que la pluralité de rainures (12 ; 32 ; 52a ; 52b) n'est pas formée.
